# EUROPÄISCHE PATENTSCHRIFT

(11) **EP 0 738 237 B1**
(45) Veröffentlichungstag und Bekanntmachung des Hinweises auf die Patenterteilung: **17.03.1999**
(21) Anmeldenummer: 95905597.1
(22) Anmeldetag: 27.12.1994
(51) Int. Cl.: C01B 33/32, C11D 3/08

(54) **SILIKATISCHE BUILDER UND IHRE VERWENDUNG IN WASCH- ODER REINIGUNGSMITTELN SOWIE MEHRSTOFFGEMISCHE FÜR DEN EINSATZ AUF DIESEM SACHGEBIET**
SILICATE BUILDERS AND THEIR USE IN WASHING OR CLEANING AGENTS AND MULTI-SUBSTANCE MIXTURES FOR USE IN THIS FIELD
ADJUVANTS SILICATES ET UTILISATION DANS LES PRODUITS DE LAVAGE OU DE NETTOYAGE ET MELANGES COMPLEXES DESTINES A ETRE UTILISES DANS CE SECTEUR

(30) Priorität: 03.01.1994 DE 4400024
(43) Veröffentlichungstag der Anmeldung: 23.10.1996
(73) Patentinhaber: Henkel Kommanditgesellschaft auf Aktien, 40191 Düsseldorf (DE)
(72) Erfinder: BREUER, Wolfgang, D-41352 Korschenbroich (DE); BAUER, Volker, D-40589 Düsseldorf (DE); POETHKOW, Jörg, D-40229 Düsseldorf (DE); KOTTWITZ, Beatrix, D-40593 Düsseldorf (DE); JACOBS, Jochen, D-42349 Wuppertal (DE); DOLHAINE, Hans, D-40589 Düsseldorf (DE); SEITER, Wolfgang, D-40595 Neuss (DE); STEVERMANN, Birgit, D-45894 Gelsenkirchen (DE); UPADEK, Horst, D-40883 Ratingen (DE)
(86) Internationale Anmeldenummer: EP9404322
(87) Internationale Veröffentlichungsnummer: WO9518766

(56) Entgegenhaltungen:
- EP-A- 0 425 427
- EP-A- 0 444 415
- FR-A- 2 157 943
- US-A- 3 918 921
- US-A- 4 011 302

## Beschreibung

Die erfindungsgemäße Lehre betrifft das Gebiet der Wertstoffe und Wertstoffgemische aus dem Bereich der Wasch- oder Reinigungsmittel. Betroffen ist dabei insbesondere der Bereich solcher Wasch- oder Reinigungsmittel für Textilien, die erfindungsgemäße Lehre ist aber nicht darauf eingeschränkt.

Arbeitsmittel der angegebenen Art und dabei insbesondere entsprechende Feststoffkonzentrate enthalten zusammen mit den waschaktiven Tensidverbindungen die sogenannten Builder beziehungsweise Buildersysteme als Hauptkomponenten neben weiteren üblichen Hilfs- und Zusatzstoffen. Die Builder oder Buildersysteme erfüllen in Wasch- oder Reinigungsmitteln eine Vielzahl von Aufgaben, die sich mit der ständigen Veränderung der Zusammensetzung, der Angebotsform und der Herstellung von Waschmitteln in den letzten Jahren und Jahrzehnten ebenfalls beträchtlich ändern. Moderne Waschmittel enthalten heute ca. 20 bis 50 Gew.-% Buildersubstanzen. Diese gehören damit zu den wichtigsten Stoffklassen für den Aufbau von Wasch- oder Reinigungsmitteln.

Wegen der hier angedeuteten Vielfalt und Evolution der Waschmittel systeme sind die Aufgaben der Builder vielgestaltig und weder vollständig noch quantitativ definiert. Die Hauptanforderungen sind jedoch gut beschrieben. Zu nennen sind hier vor allem die Wasserenthärtung, die Verstärkung der Waschwirkung, eine Vergrauungsinhibierung und die Schmutzdispergierung. Builder sollen zu der für den Waschprozeß notwendigen Alkalität beitragen, ein hohes Aufnahmevermögen für Tenside zeigen, die Wirksamkeit der Tenside verbessern, positive Beiträge zu den Eigenschaften der Feststoffprodukte beispielsweise in Pulverform liefern, und damit strukturbildend wirken oder auch die Staubproblematik senken. Diese unterschiedlichen Anforderungen lassen sich üblicherweise mit nur einer Builderkomponente allein nicht erfüllen, so daß im Regelfall auf ein System von Buildern und Co-Buildern zurückgegriffen wird.

Aus ökologischen Gründen - verwiesen sei auf die Stichworte der Gewässereutrophierung oder die Remobilisierung von Schwermetallen - sind heute Phosphor und/oder Stickstoff enthaltende Builder beziehungsweise Buildersysteme als Waschmittelkomponenten in die Kritik geraten. In großem Umfange hat sich heute insbesondere in Textilwaschmittelformulierungen das dreidimensional vernetzte, wasserunlösliche Natriumalumosilikat Zeolith NaA durchgesetzt. In beträchtlichem Ausmaß, insbesondere im Rahmen der Textilwaschmittel, wird hier allerdings die Mitverwendung sogenannter Co-Builder nötig, insbesondere um unerwünschten Inkrustationen entgegenzuwirken. In großem Umfange werden heute zusammen mit Zeolith NaA polymere Polycarboxylate, insbesondere Copolymere auf Basis von Acrylsäure und Maleinsäure gemeinsam mit Soda zu diesem Zweck eingesetzt. Zusätzlich werden häufig Komplexbildner mitverwendet.

In neuerer Zeit werden auch rein silikatische Systeme, wie die kristallinen schichtförmigen Disilikate - die sogenannten SKS-Typen (Handelsprodukt der Firma Hoechst, Bundesrepublik Deutschland) - oder Kombinationen solcher Komponenten mit Soda für den Einsatz als Builder oder Co-Builder beschrieben. Verwiesen sei in diesem Zusammenhang beispielsweise auf die nachfolgenden Druckschriften: EP-A-0 205 070, EP-A-0 320 770, EP-A-0 425 428, EP-A-0 502 325 und EP-A-0 548 599, in denen durchweg die Herstellung von kristallinen schichtförmigen Natriumsilikaten beschrieben wird. Zu verweisen ist weiterhin auf die EP-A-0 488 868 und EP-A-0 561 656. Beschrieben werden hier als Buildersubstanzen Stoffkombinationen aus Silikaten und löslichen anorganischen Salzen wie Natriumcarbonat, Natriumsulfat, Natriumborat beziehungsweise -perborat sowie weiteren Verbindungen dieser Art.

Weder Zeolith A noch die kristallinen Schichtsilikate genügen allen anwendungstechnischen Anforderungen. Bei Zeolith A sind einige anwendungstechnische Nachteile auf die Unlöslichkeit dieser Stoffklasse zurückzuführen, welche wegen der technischen Änderungen an Waschmaschinen mit zunehmend kleiner werdenden Flottenvolumina zu Dispergierungs- und Ausspülproblemen führen können. Auch ist das Magnesiumbindevermögen relativ gering.

Die kristallinen Disilikate hingegen vermögen nur wenig Niotenside aufzunehmen. Darüber hinaus sind die kristallinen Disilikate thermisch gefährdet, wodurch sich Nachteile im Rahmen von Zerstäubungsprozessen bei der Waschpulverproduktion ergeben können. Darüber hinaus ist die Herstellung definierter Disilikatphasen vergleichsweise aufwendig.

Zeitgleich mit der Entwicklung des Zeolith NaA als Builder wurde vorgeschlagen, ausgewählte wasserlösliche amorphe Natriumsilikatverbindungen als Buildersubstanzen in Wasch- oder Reinigungsmitteln einzusetzen. Verwiesen wird beispielsweise auf die US-Patentschriften 3,912,649, 3,956,467, 3,838,193 und 3,879,527. Beschrieben sind hier amorphe Natriumsilikatverbindungen als Buildersubstanzen, die durch Sprühtrocknung wäßriger Wasserglas lösungen, anschließendes Mahlen und nachfolgendes Verdichten und Abrunden unter zusätzlichem Wasserentzug des Mahlgutes hergestellt werden, vgl. hierzu beispielsweise die Figur 3 der US 3,912,649. Der Wassergehalt der zum Einsatz kommenden Produkte liegt bei ca. 18 bis 20 Gew.-% bei Schüttdichten deutlich über 500 g/l.

Aus EP-A-425 427 sind amorphe Natriumsilikate bekannt, die durch Sprühtrocknen von Wasserglas Tempern bei 300 °C und Zerkleinern des Produkts hergestellt werden.

Gemäß der EP-A-0 444 415 werden Waschmittel mit 5 bis 50 Gew.-% mindestens eines Tensids, 0,5 bis 60 Gew.-% eines Gerüststoffes sowie üblichen Waschhilfsstoffen vorgeschlagen, wobei das Kennzeichen darin liegt, daß als Gerüststoff ein amorphes wasserarmes Natriumdisilikat mit einem Wassergehalt von 0,3 bis 6 Gew.-% eingesetzt wird. Bevorzugt soll das amorphe Natriumdisilikat 0,5 bis 2 Gew.-% Wasser enthalten. Die Herstellung dieser hochentwässerten amorphen Disilikate erfolgt in einem Mehrstufenverfahren, das zunächst die Herstellung eines pulverförmigen amorphen Natriumsilikats mit einem Wassergehalt von 15 bis 23 Gew.-% vorsieht. Dieses Material wird in einem Drehrohrofen mit Rauchgas bei Temperaturen von 250 bis 500°C im Gegenstrom behandelt. Das aus dem Drehrohrofen austretende amorphe Natriumdisilikat wird mit Hilfe eines mechanischen Brechers auf Korngrößen von 0,1 bis 12 mm zerkleinert und anschließend mit einer Mühle auf Korngrößen von 2 bis 400 µm zermahlen.

Die Lehre der EP-A-0 542 131 will demgegenüber ein als Builderkomponente brauchbares aufgetrocknetes kristallwasserhaltiges Natriumsilikat mit einem freien Wassergehalt zwischen 5 und 12 Gew.-% in einem Verfahrensschritt dadurch herstellen, daß eine 40 bis 60 Gew.-%ige wäßrige Lösung des Natriumsilikats in einem mit Schlagwerkzeugen ausgerüsteten Turbotrockner mit Heißluft behandelt wird. Das trocknende Produkt durchschreitet dabei einen pseudoplastischen Zustand, der zur Ausbildung eines Produktes in Granulatform ausgenutzt wird. Die Auftrocknung dieses Granulats wird unter Arbeitsbedingungen durchgeführt, die eine Versprödung der Granulataußenhülle und ein damit verbundenes Zerbrechen der Granulatstruktur ausschließen. Auf diese Weise wird es - unter Vermeidung des sogenannten "Popcorn-Effekts" - möglich, wasserlösliche Natriumsilikate mit spezifischen Gewichten im Bereich zwischen 0,5 und 1,2 herzustellen, die sich durch vollständige Löslichkeit in Wasser bei Umgebungstemperatur auszeichnen.

Weiterhin sind aus FR-A- 21 57 943 Natrium-Silikate mit Scherbenstruktur und einem Wassergehalt von 18 % bekannt.

Die Lehre der vorliegenden Erfindung geht von der Aufgabe aus, einen multifunktionell wirksamen Builder auf Natriumsilikatbasis zur Verfügung zu stellen, der sich durch eine bisher nicht beschriebene Kombination von Stoffeigenschaften und damit verbundene Vorteile im praktischen Einsatz auszeichnet.

### Gegenstand der Erfindung

Gegenstand der Erfindung sind dementsprechend in einer ersten Ausführungsform Natriumsilikate des Modulbereiches (Molverhältnis SiO₂/Na₂O) von 1,3 bis 4 in der Form eines saugfähigen, feinteiligen Feststoffes in Scherbenstruktur mit der Befähigung zur Minderung der Inkrustationsbildung beim Einsatz als Builderkomponente in Wasch- oder Reinigungsmitteln. Diese erfindungsgemäßen Natriumsilikate kennzeichnen sich insbesondere dadurch, daß sie als röntgenamorphes übertrocknetes Gut - im nachfolgenden auch als "primäres Trocknungsgut" bezeichnet - mit Wassergehalten im Bereich unterhalb 15 Gew.-% und mit Schüttgewichten des unverdichteten Feststoffgutes gleich oder kleiner 500 g/l ausgebildet sind, das durch Auftrocknung einer wäßrigen Natriumsilikatzubereitung unter Mitverwendung einer Heißgasphase als Trocknungsmedium und/oder durch Tempern eines sprühgetrockneten Natriumsilikats mit Wassergehalten von wenigstens 15 Gew.-% bei Temperaturen im Bereich von 120 bis 450°C bei gleichzeitiger oder nachfolgender Krafteinwirkung zur Ausbildung der Scherbenstruktur hergestellt worden ist. Dieser Scherbenstruktur kommt dabei eine essentielle Bedeutung zu. Es werden darunter muldenförmige Halbschalen mit gebrochenem Rand verstanden, deren Teilchengröße vorzugsweise zwischen 10 und 200 µm liegt, wobei Werte von 20 bis 120 µm und insbesondere zwischen 50 und 100 µm besonders bevorzugt sind. Die Wandstärke dieser Schalen beträgt dabei vorzugsweise 1 bis 5 µm. Als makroskopische Vergleichsstruktur können zerkleinerte Eierschalen herangezogen werden.

Eine weitere Ausführungsform der Erfindung betrifft feste Wasch- oder Reinigungsmittel mit Schüttgewichten von wenigstens etwa 700 g/l, enthaltend Tenside in Abmischung mit die Wasch- oder Reinigungskraft verstärkenden Builderkomponenten zusammen mit weiteren Hilfs- und/oder Wertstoffen sowie schütt- und rieselfähige Wertstoffgemische zur Verwendung im genannten Gebiet, enthaltend eine oder mehrere Builderkomponente(n), die wenigstens anteilig auf Basis von wasserlöslichen Natriumsilikaten mit einem Modul von 1,3 bis 4 in Abmischung mit weiteren Wert- und/oder Hilfsstoffen des genannten Einsatzgebietes basieren. Diese Mehrstoffgemische kennzeichnen sich dadurch, daß sie - insbesondere zur Ausbildung und/oder Verstärkung der Inkrustationsminderung, d.h. zur Verbesserung der sekundären Wasch- oder Reinigungskraft - wasserlösliche röntgenamorphe Natriumsilikate als Mischungskomponente enthalten, die durch Auftrocknung wäßriger Natriumsilikatzubereitungen zu einem übertrockneten rieselfähigen Feststoffgut mit Restwassergehalten unterhalb 15 Gew.-% und Schüttgewichten von höchstens 500 g/l hergestellt worden sind. Dabei besitzen die im Gemisch vorliegenden röntgenamorphen Natriumsilikate die zuvor angegebene Scherbenform und zeichnen sich insbesondere durch das Vorliegen mikrokristalliner Feststoffbereiche aus. Mittels Untersuchungen im Transmissionselektronenmikroskop kann eindeutig festgestellt werden, daß die röntgenamorphen Silikate gemäß der vorliegenden Erfindung mehr und größere kristalline Bereiche aufweisen als die herkömmlichen sprühgetrockneten Silikate, insbesondere als Portil^{(R)}A (Natriumdisilikat; Handelsprodukt des Anmelders), wobei die kristallinen Zentren im Portil^{(R)}A im Vergleich zu den erfindungsgemäßen Silikaten überwiegend Einkristalle (Beugungspunkte) und nur in geringem Ausmaß polykristalline Bereiche (Beugungsringe) darstellen und die Zahl der Einkristalle und der polykristallinen Bereiche signifikant geringer ist als bei den erfindungsgemäßen Silikaten.

Die erfindungsgemäße Lehre erfaßt schließlich die Verwendung der angegebenen röntgenamorphen übertrockneten Natriumsilikate des angegebenen Modulbereichs mit Restwassergehalten unterhalb 15 Gew.-% als multifunktionelle Mischungskomponenten mit Builderwirkung und hoher Aufnahmekapazität für fließfähige Hilfs- und Wertstoffe in Abmischungen des Bereichs fester Wasch- oder Reinigungsmittel oder hierfür geeigneter Vorgemische. Die erfindungsgemäß zu verwendenden röntgenamorphen übertrockneten Natriumsilikate zeichnen sich insbesondere durch die folgende Kombination von Stoffeigenschaften aus: Schüttgewichte gleich oder kleiner 500 g/l, spezifische BET-Oberfläche von mindestens 5 m²/g sowie kumulatives Volumen von wenigstens 100 mm³/g. Wesentliche Elemente dieser Definition werden durch die erwähnte Scherbenstruktur des übertrockneten röntgenamorphen Natriumsilikats bestimmt, beziehungsweise sichergestellt.

### Einzelheiten zur erfindungsgemäßen Lehre

Das die unterschiedlichen Ausführungsformen des erfindungsgemäßen Handelns verbindende Bestimmungselement ist die Builderkomponente auf Natriumsilikatbasis. Die übergeordnete Zielvorstellung der Erfindung ist hier, für den angesprochenen Bereich der Wasch- oder Reinigungsmittel eine Feststoffkomponente vorzuschlagen, die sich einerseits durch eine vielgestaltige Multifunktionalität auszeichnet, zum anderen aber sowohl bei der Herstellung von Wasch- oder Reinigungsmitteln in heute gewünschten Angebotsformen als auch beim praktischen Einsatz dieser Wasch- oder Reinigungsmittel neue und verbesserte Möglichkeiten eröffnet. Die wesentlichen Parameter dieser bestimmenden Komponente im Sinne des erfindungsgemäßen Handelns werden dementsprechend nachfolgend zunächst dargestellt.

Der erfindungsgemäß zum Einsatz kommende Natriumsilikatbuilder ist ein feinteiliger Feststoff hoher und rascher Wasserlöslichkeit, der sich durch eine Mehrzahl ausgewählter und miteinander verbundener Stoffparameter auszeichnet. Seine Herstellung ist - ausgehend von Wasserglaslösungen der nachfolgend angegebenen Parameter oder auch ausgehend von konventionell durch insbesondere Sprühtrocknung hergestellten festen rieselfähigen Natriumsilikatpulvern - auf verschiedenen Wegen möglich.

Ein erstes wichtiges Bestimmungselement der erfindungsgemäßen Builderkomponente ist ihre röntgenamorphe Beschaffenheit. Amorphe Alkalisilikate werden schon seit langer Zeit in Waschmitteln eingesetzt, ihre Funktion besteht im wesentlichen darin, die für den Waschprozeß notwendige Alkalität zu liefern. In marktgängigen Waschmitteln werden amorphe Natriumsilikate als sprühgetrocknete Wassergläser mit dem Modul (SiO₂/Na₂O-Gewichtsverhältnis) von ca. 2 bis 3,5 verwendet. Diese Feststoffpulver enthalten üblicherweise ca. 18 bis 20 Gew.-% Wasser und zeichnen sich unter anderem dadurch aus, daß sie nur eine sehr geringe spezifische Oberfläche nach BET (DIN 66131) aufweisen, die wesentlich kleiner als 5 m²/g ist. Auch ist deren kumulatives Volumen, bestimmbar über Hg-Porosimetriemessungen (in Anlehnung an DIN 66133) sehr gering und erreicht üblicherweise Werte bis 50 mm³/g. Die Aufnahmekapazität dieser sprühgetrockneten Wassergläser gegenüber flüssigen Komponenten, beispielsweise nichtionischen Tensiden, ist äußerst gering. Schon bei Zugaben von 5 Gew.-% des Niotensids verlieren die Feststoffe ihre Pulvereigenschaften und verkleben untereinander. Die erfindungsgemäß jetzt zum Einsatz kommenden feinteiligen Feststoffbuilder können sich zwar in einer Reihe von Stoffparametern mit den entsprechenden Werten der handelsüblichen Wassergläser in Feststofform überschneiden, in der Summe ihrer Eigenschaften unterscheiden sie sich jedoch grundlegend.

Die erfindungsgemäßen Builderkomponenten sind röntgenamorphe Natriumsilikate des üblicherweise im hier angesprochenen Gebiet zum Einsatz kommenden Modulbereiches von 1 bis 4, insbesondere innerhalb des Bereiches von 1,3 bis 3,7. Besondere Bedeutung kommt Modulwerten von wenigstens 1,5 und dabei insbesondere dem Bereich bis 3,3 zu. Bevorzugte weitere untere Grenzwerte für den Modulbereich liegen bei 1,7 und insbesondere bei 1,9, während weiterhin bevorzugte Obergrenzen bei Modulwerten von 3,0 und insbesondere 2,7 liegen. In der bisherigen Praxis der Verwendung amorpher Wassergläser in Feststofform in Waschmitteln kann Modulwerten um 2 - also den Disilikatverbindungen - eine besondere Bedeutung zukommen. Auch erfindungsgemäß sind Wassergläser dieses Modulwertes geeignet. In wichtigen Ausführungsformen der Erfindung werden jedoch Natriumsilikatbuilder beziehungsweise Buildergemische eingesetzt, die wenigstens anteilsweise von diesem Modulwert abweichen und im übrigen im angegebenen Zahlenrahmen liegen. Hier bevorzugte Ausführungsformen kennzeichnen sich dadurch, daß wenigstens 5 Gew.-% und insbesondere wenigstens 10 bis 20 Gew.-% des röntgenamorphen Natriumsilikatbuilders vom Modulwert 2 abweichen.

Ein weiteres wichtiges Bestimmungselement für die Builderkomponenten der erfindungsgemäßen Definition ist in ihrem Wassergehalt zu sehen. Die Erfindung sieht hier den Einsatz von feinteiligen Natriumsilikaten im übertrockneten Zustand vor. Geeignet sind insbesondere Produkte mit Wassergehalten von kleiner als 15 Gew.-%, wobei dem Bereich von etwa 1 bis 13 Gew.-% und dabei wiederum dem Bereich von wenigstens etwa 3 Gew.-% Wasser, besondere Bedeutung zukommen kann. In einer wichtigen Ausführungsform kommen übertrocknete röntgenamorphe Natriumsilikate des angegebenen Modulbereiches mit Wassergehalten oberhalb etwa 6 Gew.-% und insbesondere des entsprechenden Bereiches bis etwa 13 oder bis unterhalb von 15 Gew.-% in Betracht.

Übertrocknete Natriumsilikate dieser Art zeichnen sich als primäres Trocknungsgut durch extrem geringe Schüttdichten aus. Erfindungsgemäß sind dementsprechend Natriumsilikatbuilder der geschilderten Art bevorzugt, die Schüttdichten gleich oder kleiner 500 g/l und insbesondere von höchstens etwa 400 g/l besitzen. Schüttdichten des primären Trocknungsgutes unterhalb des zuletzt genannten Zahlenwertes können besonders bevorzugt sein, als geeigneter Zahlenbereich ist hier für die Schüttdichten insbesondere zu nennen 100 bis 350 g/l.

Ein primäres Trocknungsgut auf Natriumsilikatbasis dieser Art ist durch eine Reihe von Herstellverfahren zugänglich, auf die nachfolgend noch im einzelnen eingegangen wird. Unabhängig von der jeweils speziellen Herstellung zeichnen sich diese erfindungsgemäß bevorzugten Anbietungsformen des feinteiligen Natriumsilikats durch hohe BET-Oberflächen (DIN 66131) und durch hohe Zahlenwerte zum kumulativen Volumen (DIN 66133) aus. Die BET-Oberfläche erfindungsgemäß besonders brauchbarer Builder liegt bei wenigstens etwa 5 m²/g, wobei unteren Grenzwerten für diese BET-Oberfläche von wenigstens etwa 7,5 m²/g und insbesondere von wenigstens etwa 10 m²/g bis beispielsweise etwa 20 m²/g besondere Bedeutung zukommt. Das kumulative Volumen dieser Builder in der Form des primären Trocknungsgutes liegt in der Regel bei Werten von wenigstens 100 mm³/g, wobei entsprechende Werte von wenigstens 150 mm³/g und insbesondere von wenigstens 200 mm³/g besonders bevorzugt sind.

Die hier zuletzt geschilderten Stoffparameter der niederen Schüttdichten und hohen Werte für die BET-Oberfläche und das kumulative Volumen stehen in Beziehung zur Struktur des Feststoffgutes. Es handelt sich bei Materialien dieser Art in der Regel um ein übertrocknetes und damit versprödetes Wasserglas, das durch geeignete Verfahrensmaßnahmen zu einem scherbenartigen Gut aufgebrochen ist. Die Ausbildung dieser Scherbenstruktur führt zu den hier zitierten wichtigen physikalischen Eigenschaften. Die vorgängige Versprödung durch Übertrocknung hat offensichtlich wichtigen Einfluß auf die anwendungstechnischen Eigenschaften der erfindungsgemäßen Builderkomponenten im Rahmen des Gesamtwaschmittels. Auffallend ist dabei insbesondere - zusätzlich zur Verbesserung der Primärwaschkraft - die Verstärkung der Inkrustationsinhibierung und damit die Verbesserung der sogenannten sekundären Waschkraft von beispielsweise Textilwaschmitteln.

Die Löslichkeit und Lösegeschwindigkeit der erfindungsgemäßen Builderkomponenten in Wasser ist grundsätzlich gut. Dabei gilt jedoch die folgende Besonderheit: Man beobachtet ein nachträgliches Lösen von Silikat im Vergleich zum Alkali. Gegenüber bisher üblichen Handelsprodukten liegt hier eine wichtige Abweichung vor, die möglicherweise insbesondere im Zusammenhang mit der Verbesserung der sekundären Waschwirkung zu sehen ist. Die Lösegeschwindigkeit des primären Trocknungsgutes liegt vorzugsweise bei höchstens etwa 1 Minute unter Standardbedingungen (95 Gew.-%/40°C).

Das Aufnahmevermögen des primären Trocknungsgutes im Sinne der erfindungsgemäßen Definition für Flüssigkomponenten ist überraschend hoch. Vermutlich spielt auch hier der Scherbencharakter in der räumlichen Ausgestaltung des primären Trocknungsguts eine wichtige Rolle. In geeigneten Mischaggregaten können beispielsweise mindestens 40 oder 50 Gew.-% - bezogen auf das Gewicht des Alkalisilikatbuilders - an Flüssigkomponenten wie entsprechenden Niotensiden aufgebracht werden. Bei wichtigen Ausführungsformen der erfindungsgemäßen Builderkomponenten können die Flüssigbestandteile mengengleich aufgenommen werden, wobei es auch möglich ist, wenigstens das Doppelte des Eigengewichts an Flüssigkomponente - wieder bezogen auf das Gewicht des erfindungsgemäß definierten Natriumsilikatbuilders - einzutragen und hier zu binden.

Die Herstellung der im Sinne der erfindungsgemäßen Lehre übertrockneten Natriumsilikate kann sowohl von wäßrigen fließfähigen Natriumsilikatzubereitungen als auch von bereits vorliegenden Trockenformen des Natriumsilikats - insbesondere ausgehend von einem sprühgetrockneten Natriumsilikat - erfolgen. Wesentlich ist die hinreichende Entfernung des Wassers aus dem aufzutrocknenden Gut in den zahlenmäßig zuvor definierten Bereich des übertrockneten Natriumsilikats. Die erfindungsgemäß geforderte hinreichende Absenkung des Wassergehaltes kann insbesondere durch Behandlung des feinteiligen Gutes bei hinreichend über 100°C erhöhten Temperaturen erfolgen. Geeignet ist hier insbesondere der Temperaturbereich bis maximal 500°C, vorzugsweise von 120 bis 450°C. Es bilden sich zunächst versprödete Materialschichten des Natriumsilikats aus - beispielsweise entsprechend versprödete Hohlkugeln eines sprühgetrockneten Produktes - die schon beim Eintrag mäßiger Scher- beziehungsweise Schlagkräfte zur gewünschten Hohlkugelscherbenstruktur aufbrechen. In einer wichtigen Ausführungsform der Erfindung werden damit Natriumsilikate der geschilderten Stoff parameter zur Verfügung gestellt, die durch Auftrocknung einer wäßrigen Natriumsilikatzubereitung unter Mitverwendung einer Heißgasphase als Trocknungsmedium, beispielsweise durch eine Sprühtrocknung und nachfolgendem Tempern, und/oder durch Tempern eines sprühgetrockneten Natriumsilikats mit Wassergehalten von wenigstens 15 Gew.-% bei Temperaturen von bis zu 500 °C, vorzugsweise 120 bis 450°C und erforderlichenfalls bei gleichzeitiger und nachfolgender Krafteinwirkung zur Ausbildung der Scherbenstruktur hergestellt worden sind. Die Auftrocknung des wasserhaltigen Gutes zum übertrockneten Material im Sinne der erfindungsgemäßen Definition und dessen Zerstörung zur Scherbenstruktur kann in einem Verfahrensschritt, also in Vorrichtungen, die den zusätzlichen Eintrag mechanischer Energie in das zu trocknende Gut ermöglichen, oder auch getrennt voneinander durchgeführt werden.

Ein Beispiel für die Gewinnung der erfindungsgemäßen Builderfeststoffe in einem integralen Arbeitsschritt liegt im Einsatz von Turbotrocknern, die insbesondere mit Schlageinrichtungen ausgerüstet sein können, so wie sie beispielsweise in der eingangs zitierten EP-A-0 542 131 beschrieben sind. Abweichend von der Lehre dieser Druckschrift wird erfindungsgemäß jetzt ein solcher Turbotrockner aber unter Bedingungen gefahren, die nicht zum Erhalt der Granulatstruktur, sondern zur gezielten Erzeugung und zum Brechen aufgeblähter Partikel führen. Aber auch die Kombination einer Sprühtrocknung flüssiger Wasserglaslösungen zum rieselfähigen Feststoff und die nachfolgende Temperung bei Temperaturen von beispielsweise 200 bis 450°C führt bereits zu der erfindungsgemäß angestrebten Vergrößerung der Oberfläche des Feststoffmaterials. Durch den zusätzlichen Energieeintrag beispielsweise in Misch-, Mahl- oder Knetaggregaten bricht dann das übertrocknete Gut im angestrebten Sinne, so daß die hohe innere Oberfläche für Flüssigkomponenten verfügbar wird.

Charakteristisch für die röntgenamorphen primären Trockenprodukte im Sinne der erfindungsgemäßen Definition ist, daß mit Hilfe der Elektronenbeugung mikrokristalline Anteile festgestellt werden können. Im Rahmen dieser Erfindung bedeutet dabei Mikrokristallinität, daß zwar Nahordnungen der einzelnen Bausteine vorhanden sind, jedoch übergreifende Fernordnungen fehlen, so daß im Röntgenbeugungsspektrum keine Reflexe auftreten und die Silikate somit als röntgenamorph charakterisierbar sind.

Wie eingangs angegeben, umfaßt die Erfindung weiterführende Ausführungsformen, in denen die hier in ihren Stoffeigenschaften geschilderten übertrockneten Natriumsilikatbuilder als Bestandteil von insbesondere festen Wasch- oder Reinigungsmitteln oder aber als Bestandteil in Vorgemischen für die Herstellung von solchen Wasch- oder Reinigungsmitteln eingesetzt sind. Die erfindungsgemäße Lehre umfaßt in dieser Ausgestaltung praktisch beliebige Stoffkombinationen, in denen die multifunktionelle Kombination von Stoffparametern wenigstens anteilig ausgenützt werden soll.

Für die Ausbildung und Konfektionierung von festen Wasch- oder Reinigungsmitteln oder Vorgemischen für diesen Einsatzzweck können die erfindungsgemäß beschriebenen Builderkomponenten dann besonders wichtige Mischungsbestandteile sein, wenn bei Raum- und/oder Verarbeitungstemperatur flüssige Mischungsbestandteile in nicht unwesentlichen Mengen in das Wirkstoffgemisch eingearbeitet werden sollen. Durch die hohen BET-Oberflächen und das zur Verfügung stehende kumulative Volumen der erfindungsgemäßen Builder wird eine wirkungsvolle Adsorption von Flüssigkomponenten ermöglicht, ohne daß die Pulvereigenschaften der Festkörper verloren gehen. Insbesondere gilt das auch für erhöhte Temperaturbereiche, die im Rahmen der Herstellung der bei Raumtemperatur festen Wertstoffzubereitungen durchschritten werden, in denen sich Mischungskomponenten, beispielsweise durch Schmelzen verflüssigen, die an sich bei Raumtemperatur fest sind.

Vorteilhaft ist für die Praxis aber nicht nur diese Befähigung, beträchtliche Flüssiganteile zu binden und damit gewissermaßen zu verfestigen, beim Eintrag des Mischgutes in die wäßrige Flotte kommt ein anderer vorteil zum Tragen: Die innige Durchsetzung einer beispielsweise verzögert wasserlöslichen Komponente mit dem leicht wasserlöslichen anorganischen Builder in Scherbenstruktur im Sinne der erfindungsgemäßen Definition führt zu einer unmittelbaren Dispergierungshilfe beim Lösevorgang des aufgenommenen schwerer wasserlöslichen Gutes. Hier liegen wichtige verfahrenstechnische und anwendungstechnische Vorteile beispielsweise bei der Herstellung und Konfektionierung von Wasch- oder Reinigungsmitteln in hochverdichteter Form, wie sie heute vom Verbraucher und vom Markt gewünscht und gefördert werden. Lediglich beispielhaft sei auf die Angebotsform der Textilwaschmittel in der Ausbildung als hochverdichtete Extrudate verwiesen.

Besondere Bedeutung kann den erfindungsgemäßen strukturgebenden Buildern in Scherbenform zur Bindung und Aufnahme von Flüssigkomponenten aus dem Bereich der Herstellung von Wasch- oder Reinigungsmitteln zukommen. Als Beispiele seien hier bei Raumtemperatur oder mäßig erhöhten Temperaturen flüssige niotensidische Verbindungen, wasserhaltige Aniontensidpasten beziehungsweise Zubereitungen, aber auch Schmelzen beziehungsweise plastifizierte hochkonzentrierte Aniontenside, Schauminhibitoren wie Silikone und/oder Paraffine, aber auch Textilweichmacherformulierungen zum Einsatz in Wasch- oder Reinigungsmitteln für Haushalt und Gewerbe benannt. Die innige Vermischung der fließfähigen Komponenten mit der anorganischen Komponente mit großer Oberfläche und die Möglichkeit, diesen vorgegebenen Mischungszustand auch im Rahmen der Vollkonfektionierung der Wasch- oder Reinigungsmittel aufrechtzuerhalten, sichert nicht nur die zunächst gewünschte Verfestigung des Wertstoffgemisches, insbesondere findet die funktionelle Absicherung der jeweiligen Wertstoffkomponente beim Einmischen in die wäßrige Waschflotte durch die mit großer Oberfläche und hoher Wasserlöslichkeit vorliegende Builderkomponente statt. Die erfindungsgemäß eingesetzten Builderkomponenten besitzen durchweg hohe Calcium- und Magnesiumbindevermögen, in der Regel von mindestens 4 mval/g Produkt (berechnet auf die wasserfreie Substanz). Optimiert und sichergestellt wird damit die Funktionsfähigkeit auch gerade von gegenüber Wasserhärte empfindlichen Aktivsubstanzen bei ihrem Erstkontakt mit umgebender wäßriger Phase in der Waschflotte. Es leuchtet sofort ein, daß damit für die nachfolgenden Arbeitsschritte des Wasch- oder Reinigungsprozesses wichtige Anfangshilfen gegeben werden. Verständlich wird daraus aber gerade auch ein wesentlicher Kern, in dem sich die erfindungsgemäße Lehre vom Stand der Technik unterscheidet: Die partikuläre Anbietungsform der erfindungsgemäß beschriebenen und eingesetzten Builderkomponenten auf Natriumsilikatbasis kennzeichnet sich unter anderem durch die mit der Scherbenform verbundene große zugängliche Oberfläche. Für den Reaktionsablauf der Auflösung des Wasch- oder Reinigungsmittelgemisches in der Waschflotte und die Primärreaktionen der Interaktion zwischen wäßriger Flotte und Wirkstoffmischung führt das zu wichtigen Vorteilen gegenüber vergleichbaren Stoffmischungen, in denen die Builderkomponente in Form weitgehend abgerundeter kleiner Partikel mit insgesamt stark verringerter Oberfläche vorliegen beziehungsweise zum Einsatz kommen.

In dem hier betroffenen Gebiet der Abmischungen der erfindungsgemäßen röntgenamorphen Builder auf Natriumsilikatbasis mit weiterführenden Wert- und/oder Hilfsstoffen aus dem Gebiet der Wasch- oder Reinigungsmittel werden die im jeweiligen Stoffgemisch vorliegenden Mengenverhältnisse von Builder zu aufgenommenem Wert- und/oder Hilfsstoff(gemisch) durch den Einsatzzweck unter Berücksichtigung des allgemeinen Fachwissens bestimmt. Lediglich beispielhaft seien einzelne charakteristische Fälle dargestellt:

In fertigen Wasch- oder Reinigungsmittelformulierungen liegt der Buildergehalt üblicherweise im Bereich von etwa 15 bis 60 Gew.-% - bezogen auf das Gesamtgewicht des festen Wasch- oder Reinigungsmittels. Hier können erfindungsgemäß ausgestaltete Alkalisilikatbuilder den gesamten Builderanteil ausmachen. Ebenso ist es aber auch möglich, erfindungsgemäß ausgestaltete Builderkomponenten nur als einen Anteil eines weitere an sich bekannte Mischungskomponenten mit Buildereigenschaften enthaltenden Gesamtgemisches einzusetzen. Mitentscheidend wird hier die angestrebte Funktion sein, die den erfindungsgemäß definierten Builderkomponenten im Rahmen des gesamten Wasch- oder Reinigungsmittels zukommt. Sollen primär flüssige Wirkstoffkomponenten in verfestigter Form in das Gesamtgemisch eingetragen werden, die insbesondere in vergleichsweise geringen Zusatzmengen mitverwendet werden - beispielsweise Schauminhibitoren - dann kann der Gehalt solcher Wasch- oder Reinigungsmittel an Alkalisilikatbuildern im erfindungsgemäßen Sinne vergleichsweise gering sein. Hier wird dann primär Gebrauch gemacht von der hohen Aufnahmekapazität des erfindungsgemäß definierten Materials für Flüssigphasen. Ganz anders liegen die Verhältnisse, wenn im fertigen Wasch- oder Reinigungsmittel den erfindungsgemäß definierten Buildern für den praktischen Anwendungszweck die überwiegende oder gar die alleinige Builderfunktion zukommt. Hier werden dann vergleichsweise große Mengen des Mehrstoffgemisches durch die erfindungsgemäß definierten Natriumsilikate ausgebildet sein.

Die Abmischung der erfindungsgemäßen Builderkomponenten mit flüssigen oder erschmolzenen Wert- und/oder Hilfsstoffen kompensiert den von der heutigen Waschmitteltechnologie empfundenen Nachteil für die in Scherbenform vorliegenden übertrockneten Natriumaluminiumsilikate, der sich in ihrem niederen Schüttgewicht ausdrückt. Durch Aufnahme der Wert- und/oder Hilfsstoffe in fließfähigem Zustand wird das Schüttgewicht des kombinierten Materials sehr weitgehend frei variierbar. So können die Builderkomponenten auch in modernen Waschmitteln mit Schüttdichten von wenigstens etwa 700 g/l eingesetzt werden.

Wenn auch die Abmischung der erfindungsgemäß definierten Builderkomponenten mit fließfähigen Wert- und/oder Hilfsstoffen wenigstens in einer ersten Verarbeitungsstufe eine bevorzugte Maßnahme - insbesondere im Sinne einer hinreichenden Verdichtung des Gutes - sein kann, so ist die Lehre der Erfindung hierauf jedoch nicht eingeschränkt. Auch die unmittelbare Abmischung mit Feststoffen führt zu wichtigen Vorteilen, die dann insbesondere in der Anwendung der Mehrstoffgemische als Wasch- oder Reinigungsmittel liegen können. Zum Tragen kommt hier insbesondere die Fähigkeit der beschriebenen Builderkomponenten zur Verminderung der Inkrustationsbildung und damit zur Verbesserung der sekundären Waschkraft von insbesondere Textilwaschmitteln. Durch Wahl des Moduls - in Abstimmung mit der sonstigen Zusammensetzung des Mehrstoffgemisches und dem beabsichtigten Einsatzzweck - können Wirkungsoptimierungen in an sich bekannter Weise eingestellt werden. Die Erfindung sieht darüber hinaus vor, Gemische von unterschiedlichen Builderkomponenten im Sinne der erfindungsgemäßen Definition einzusetzen, die sich insbesondere durch ihre jeweiligen Modulwerte unterscheiden. Auf diese Weise können weiterführende Optimierungen in der Gesamtwirkung eingestellt werden.

Im nachfolgenden werden ohne Anspruch auf Vollständigkeit Angaben zu Mischungskomponenten gemacht, die im Rahmen der erfindungsgemäßen Mehrstoffgemische mitverwendet werden können. Grundsätzlich steht hier der gesamte Bereich der Wert- und Hilfsstoffe aus dem Gebiet der Wasch- oder Reinigungsmittel zur Verfügung. Insbesondere kommen hier Tenside anionischer, nichtionischer, kationischer, amphoterer und/oder zwitterionischer Struktur sowie weitere anorganische und/oder organische Buildersubstanzen, Bleichmittel und Bleichaktivatoren, Enzyme und Enzymstabilisatoren, Schauminhibitoren, optische Aufheller, anorganische alkalische und/oder in Wasser neutral reagierende Salze, beispielsweise Sulfate oder Chloride, und Farb- und Duftstoffe in Betracht.

Als Tenside vom Sulfonat-Typ kommen vorzugsweise die bekannten C₉-C₁₃-Alkylbenzolsulfonate, Olefinsulfonate und Alkansulfonate in Betracht. Geeignet sind auch Ester von α-Sulfofettsäuren bzw. die Disalze der α-Sulfofettsäuren. Weitere geeignete Aniontenside sind sulfierte Fettsäureglycerinester, welche Mono-, Di- und triester sowie deren Gemische darstellen, wie sie bei der Herstellung durch Veresterung durch ein Monoglycerin mit 1 bis 3 Mol Fettsäure oder bei der Umesterung von Triglyceriden mit 0,3 bis 2 Mol Glycerin erhalten werden.

Geeignete Tenside vom Sulfat-Typ sind die Schwefelsäuremonoester aus primären Alkoholen natürlichen und synthetischen Ursprungs, insbesondere aus Fettalkoholen, z.B. aus Kokosfettalkohol, Talgfettalkohol, Oleylalkohol, Lauryl-, Myristyl-, Cetyl- oder Stearylalkohol, oder den C₁₀-C₂₀-Oxoalkoholen, und diejenigen sekundärer Alkohole dieser Kettenlänge. Auch die Schwefelsäuremonoester der mit 1 bis 6 Mol Ethylenoxid ethoxylierten Alkohole, wie 2-Methyl-verzweigte C₉-C₁₁-Alkohole mit im Durchschnitt 2 oder 3,5 Mol Ethylenoxid, sind geeignet.

Bevorzugte Aniontensid-Mischungen enthalten Kombinationen aus Alk(en)yl-sulfaten, insbesondere Mischungen aus gesättigten und ungesättigten Fettalkohol sulfaten, und Alkylbenzolsulfonaten, sulfierte Fettsäureglycerinestern und/oder α-Sulfofettsäureestern und/oder Alkylsulfosuccinaten. Insbesondere sind hierbei Mischungen bevorzugt, die als anionische Tenside Alk(en)ylsulfate und Alkylbenzolsulfonate und optional α-Sulfofettsäuremethylester und/oder sulfierte Fettsäureglycerinester enthalten.

Als weitere anionische Tenside kommen insbesondere Seifen, vorzugsweise in Mengen unterhalb 5 Gew.-%, in Betracht. Geeignet sind gesättigte Fettsäureseifen, wie die Salze der Laurinsäure, Myristinsäure, Palmitinsäure oder Stearinsäure, sowie insbesondere aus natürlichen Fettsäuren, z.B. Kokos-, Palmkern- oder Talgfettsäuren, abgeleitete Seifengemische. Ungesättigte Fettsäureseifen, die sich beispielsweise von der Ölsäure ableiten, können ebenfalls vorhanden sein, allerdings soll ihr Anteil an den Seifen 50 Gew.-% nicht überschreiten.

Die anionischen Tenside und Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor. Der Gehalt der Mittel an anionischen Tensiden beträgt im allgemeinen zwischen 5 und 40 Gew.-%.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂-C₁₄-Alkohole mit 3 EO oder 4 EO, C₉-C₁₁-Alkohol mit 7 EO, C₁₃-C₁₅-Alkohole mit 3 EO, 5 EO, 7 EO oder 8 EO, C₁₂-C₁₈-Alkohole mit 3 EO, 5 EO oder 7 EO und Mischungen aus diesen, wie Mischungen aus C₁₂-C₁₄-Alkohol mit 3 EO und C₁₂-C₁₈-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO-A-90/13533 beschriebenen Verfahren hergestellt werden.

Außerdem können als weitere nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Weitere geeignete Tenside sind Polyhydroxyfettsäureamide der Formel (I), 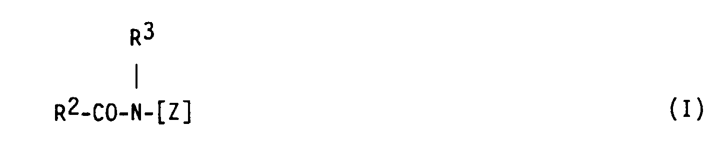 in der R²CO für einen aliphatischen Acylrest mit 6 bis 22 Kohlenstoffatomen, R³ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht.

Der Anteil der nichtionischen Tenside in den Mitteln beträgt im allgemeinen 2 bis 25 Gew.-%.

Als weitere anorganische Buildersubstanzen können alle bisherigen üblicherweise eingesetzten Buildersubstanzen eingesetzt werden. Zu diesen zählen insbesondere Zeolithe, kristalline Schichtsilikate, ja sogar Phosphate, wenn ihr Einsatz nicht aus ökologischen Gründen vermieden werden sollte. Ihr Gehalt kann in Abhängigkeit des Gehalts an den erfindungsgemäßen röntgenamorphen und übertrockneten Silikaten mit Scherbenstruktur in einem weiten Bereich variieren. Die Summe aus üblichen Buildersubstanzen und den erfindungsgemäßen Silikaten beträgt üblicherweise 10 bis 60 Gew.-%.

Brauchbare organische Gerüstsubstanzen sind beispielsweise die bevorzugt in Form ihrer Natriumsalze eingesetzten Polycarbonsäuren, wie Citronensäure, Adipinsäure, Bernsteinsäure, Glutarsäure, Weinsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen.

Geeignete polymere Polycarboxylate sind beispielsweise die Natriumsalze der Polyacrylsäure oder der Polymethacrylsäure, beispielsweise solche mit einer relativen Molekülmasse von 800 bis 150000 (auf Säure bezogen). Geeignete copolymere Polycarboxylate sind insbesondere solche der Acrylsäure mit Methacrylsäure und der Acrylsäure oder Methacrylsäure mit Maleinsäure.

Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 5000 bis 200000, vorzugsweise 10000 bis 120000 und insbesondere 50000 bis 100000. Insbesondere bevorzugt sind auch biologisch abbaubare Terpolymere, beispielsweise solche, die als Monomere Salze der Acrylsäure und der Maleinsäure sowie Vinylalkohol bzw. Vinylalkohol-Derivate (DE-A43 00 772) oder die als Monomere Salze der Acrylsäure und der 2-Alkylallylsulfonsäure sowie Zucker-Derivate (DE-C-42 21 381) enthalten.

Weitere geeignete Buildersysteme sind Oxidationsprodukte von carboxylgruppenhaltigen Polyglucosanen und/oder deren wasserlöslichen Salzen, wie sie beispielsweise in der internationalen Patentanmeldung WO-A-93/08251 beschrieben werden oder deren Herstellung beispielsweise in der internationalen Patentanmeldung W0-A-93/16110 oder der älteren deutschen Patentanmeldung P 43 30 393.0 beschrieben wird.

Zusätzlich können die Mittel auch Komponenten enthalten, welche die Öl- und Fettauswaschbarkeit aus Textilien positiv beeinflussen. Dieser Effekt wird besonders deutlich, wenn ein Textil verschmutzt wird, das bereits vorher mehrfach mit einem erfindungsgemäßen Waschmittel, das diese öl- und fett lösende Komponente enthält, gewaschen wird. Zu den bevorzugten öl- und fettlösenden Komponenten zählen beispielsweise nichtionische Celluloseether wie Methylhydroxypropylcellulose mit einem Anteil an Methoxyl-Gruppen von 15 bis 30 Gew.-% und an Hydroxypropoxyl-Gruppen von 1 bis 15 Gew.-%, jeweils bezogen auf den nichtionischen Celluloseether, sowie die aus dem Stand der Technik bekannten Polymere der Phthalsäure und/oder der Terephthalsäurebzw. von deren Derivaten, insbesondere Polymere aus Ethylenterephthalaten und/oder Polyethylenglykolterephthalaten.

Zusätzlich zu den Silikaten können die Mittel auch weitere wasserlösliche anorganische Salze wie Bicarbonate und Carbonate, vorzugsweise in ihrer Alkalimetallsalzform, enthalten. Der Gehalt der Mittel an Natriumcarbonat kann dabei beispielsweise bis zu etwa 20 Gew.-%, vorzugsweise zwischen 5 und 15 Gew.-% betragen und liegt bei einem Gehalt der Mittel an den erfindungsgemäßen Silikaten von oberhalb 20 Gew.-% insbesondere bei Werten bis etwa 10 Gew.-%. Nach der Lehre der älteren deutschen Patentanmeldung P 43 19 578.4 können Alkalicarbonate auch durch schwefelfreie, 2 bis 11 Kohlenstoffatome und gegebenenfalls eine weitere Carboxyl- und/oder Aminogruppe aufweisende Aminosäuren und/oder deren Salze ersetzt werden. Im Rahmen dieser Erfindung ist es dabei bevorzugt, daß ein teilweiser bis vollständiger Austausch der Alkalicarbonate durch Glycin bzw. Glycinat erfolgt.

Unter den als Bleichmittel dienenden, in Wasser H₂O₂ liefernden Verbindungen haben das Natriumperborattetrahydrat und das Natriumperboratmonohydrat besondere Bedeutung. Weitere brauchbare Bleichmittel sind beispielsweise Natriumpercarbonat, Peroxypyrophosphate, Citratperhydrate sowie H₂O₂ liefernde persaure Salze oder Persäuren, wie Perbenzoate, Peroxophthalate, Diperazelainsäure oder Diperdodecandisäure. Der Gehalt der Mittel an Bleichmitteln beträgt vorzugsweise 5 bis 25 Gew.-% und insbesondere 10 bis 20 Gew.-%, wobei vorteilhafterweise Perboratmonohydrat eingesetzt wird.

Um beim Waschen bei Temperaturen von 60 °C und darunter eine verbesserte Bleichwirkung zu erreichen, können Bleichaktivatoren in die Präparate eingearbeitet werden. Beispiele hierfür sind mit H₂O₂ organische Persäuren bildende N-Acyl- bzw. O-Acyl-verbindungen, vorzugsweise N,N'-tetra-acylierte Diamine, p-(Alkanoyloxy)benzolsulfonate, ferner Carbonsäureanhydride und Ester von Polyolen wie Glucosepentaacetat. Weitere bekannte Bleichaktivatoren sind acetylierte Mischungen aus Sorbitol und Mannitol, wie sie beispielsweise in der europäischen Patentanmeldung EP-A-0 525 239 beschrieben werden. Der Gehalt der bleichmittelhaltigen Mittel an Bleichaktivatoren liegt in dem üblichen Bereich, vorzugsweise zwischen 1 und 10 Gew.-% und insbesondere zwischen 3 und 8 Gew.-%. Besonders bevorzugte Bleichaktivatoren sind N,N,N',N'-Tetraacetylethylendiamin (TAED), 1,5-Di-acetyl-2,4-dioxo-hexahydro-1,3,5-triazin (DADHT) und acetylierte Sorbitol-Mannitol-Mischungen (SORMAN).

Beim Einsatz in maschinellen Waschverfahren kann es von Vorteil sein, den Mitteln übliche Schauminhibitoren zuzusetzen. Als Schauminhibitoren eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, ggf. silanierter Kieselsäure sowie Paraffine, Wachse, Mikrokristallinwachse und deren Gemische mit silanierter Kieselsäure oder Bistearylethylendiamid. Mit Vorteilen werden auch Gemische aus verschiedenen Schauminhibitoren verwendet, z.B. solche aus Silikonen, Paraffinen oder Wachsen. Vorzugsweise sind die Schauminhibitoren, insbesondere Silikon- oder Paraffin-haltige Schauminhibitoren, an eine granulare, in Wasser lösliche bzw. dispergierbare Trägersubstanz gebunden. Insbesondere sind dabei Mischungen aus Paraffinen und Bistearylethylendiamiden bevorzugt.

Als Enzyme kommen solche aus der Klasse der Proteasen, Lipasen, Amylasen, Cellulasen bzw. deren Gemische in Frage. Besonders gut geeignet sind aus Bakterienstämmen oder Pilzen, wie Bacillus subtilis, Bacillus licheniformis und Streptomyces griseus gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase oder Protease und Cellulase oder aus Cellulase und Lipase oder aus Protease, Amylase und Lipase oder Protease, Lipase und Cellulase, insbesondere jedoch Cellulase-haltige Mischungen von besonderem Interesse. Auch Peroxidasen oder Oxidasen haben sich in einigen Fällen als geeignet erwiesen. Die Enzyme können an Trägerstoffen adsorbiert und/oder in Hüllsubstanzen eingebettet sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,1 bis etwa 2 Gew.-% betragen.

Als Stabilisatoren insbesondere für Perverbindungen und Enzyme kommen die Salze von Polyphosphonsäuren, insbesondere 1-Hydroxyethan-1,1-diphosphonsäure (HEDP), Diethylentriaminpentamethylenphosphonsäure (DETPMP) oder Ethylendiamintetramethylenphosphonsäure (EDTMP) in Betracht.

Vergrauungsinhibitoren haben die Aufgabe, den von der Faser abgelösten Schmutz in der Flotte suspendiert zu halten und so das Vergrauen zu verhindern. Hierzu sind wasserlösliche Kolloide meist organischer Natur geeignet, beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, z.B. abgebaute Stärke, Aldehydstärken usw.. Auch Polyvinylpyrrolidon ist brauchbar. Bevorzugt werden jedoch Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, sowie Polyvinylpyrrolidon beispielsweise in Mengen von 0,1 bis 5 Gew.-%, bezogen auf die Mittel, eingesetzt.

Die Mittel können als optische Aufheller Derivate der Diaminostilbendisulfonsäure bzw. deren Alkalimetallsalze enthalten. Geeignet sind z.B. Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, z.B. die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten Aufheller können verwendet werden.

Ebenso Gegenstand der Erfindung sind granulare Silikat-Compounds, welche außer den erfindungsgemäßen röntgenamorphen Silikaten mit Scherbenstruktur mindestens eine weitere feste Komponente aufweisen, die üblicherweise Inhaltsstoffe von Wasch- oder Reinigungsmitteln sind.

In einer bevorzugten Ausführungsform weisen die Compounds röntgenamorphe Silikate mit Scherbenstruktur und Zeolith, vorzugsweise im Gewichtsverhältnis 3 : 1 bis 1 : 3, jeweils bezogen auf die wasserhaltigen Substanzen, und insbesondere im Gewichtsverhältnis 2 : 1 bis 1 : 2 auf. Weitere mögliche Inhaltsstoffe dieser Zeolith-röntgenamorphen Silikat-Compounds sind vorteilhafterweise Natriumcarbonat, vorzugsweise bis zu 5 Gew.-%, bezogen auf das Compound, aber auch Bicarbonate, Sulfate, Bisulfate und optische Aufheller. Ebenso ist es bevorzugt, daß Zeolith-röntgenamorphe Silikat-Compounds zusätzlich Cobuilder wie Citrat, Asparaginsäure bzw. Asparaginat, Phosphonate, polymere Polycarboxylate, Polyasparaginsäure und/oder oxydierte Stärken enthalten. Ihr Gehalt beträgt vorzugsweise nicht mehr als 20 Gew.-%, bezogen auf das Compound. In einer weiteren Ausführungsform können die Zeolith-röntgenamorphe Silikat-Compounds auch Aniontenside, vor allem Alkylbenzolsulfonate und/oder Alkylsulfate wiederum in Mengen von maximal 20 Gew.-%, vorzugsweise von maximal 15 Gew.-% enthalten. Dabei ist zu berücksichtigen, daß der Gehalt der Compounds an Zeolith und röntgenamorphen Silikaten mit Scherbenstruktur vorzugsweise mindestens 50 Gew.-% bis 100 Gew.-%, inbesondere 60 bis 100 Gew.-% beträgt. Der Gehalt der Compounds in fertigen Wasch- oder Reinigungsmitteln beträgt vorzugsweise 0,5 bis 10 Gew.-%, insbesondere 1 bis 8 Gew.-%, beispielsweise 2 bis 5 Gew.-%.

In einer weiteren bevorzugten Ausführungsform weisen die Compounds röntgenamorphe Silikate mit Scherbenstruktur und zwingend Cobuilder, vorzugsweise Citronensäure/Citrat, Asparaginsäure/Asparaginat, polymere Polycarboxylate, Polyasparaginsäure, Phosphonate und/oder oxydierte Stärken auf. Dabei liegt das Gewichtsverhältnis röntgenamorphe Silikate zu Cobuilder vorzugsweise oberhalb von 1. Diese Compounds können wie die obenangegebenen ebenfalls (Bi-)Carbonate, (Bi-)Sulfate und/oder optische Aufheller enthalten, wobei der Gehalt dieser Stoffe wiederum vorteilhafterweise auf maximal 5 Gew.-% beschränkt ist. Ebenso können die obengenannten Aniontenside in den genannten Mengen enthalten sein. Fertige Wasch- oder Reinigungsmittel enthalten die Cobuilder-röntgenamorphe Silikat-Compounds in derartigen Mengen, daß die Mittel insgesamt 10 bis 15 Gew.-% Silikate und 10 bis 15 Gew.-% Zeolith enthalten sowie vorzugsweise 5 bis 10 Gew-% Citrate, 5 Gew.-% polymere Polycarboxylate und etwa 1 Gew.-% Phosphonat aufweisen. Wasch- oder Reinigungsmittel hingegen, welche weniger als 5 Gew.-% Zeolith enthalten, weisen derartige Mengen an Cobuilder-röntgenamorphen Silikat-Compounds auf, daß die Mittel insgesamt 20 bis 30 Gew.-% Silikat und vorzugsweise 5 bis 10 Gew.-% Citronensäure/Citrat, 0 bis 10 Gew.-%, insbesondere 5 bis 10 Gew.-% polymere Polycarboxylate oder Polyasparaginsäure oder oxidierte Stärke sowie etwa 1 Gew.-% Phosphonat enthalten.

In einer weiteren Ausführungsform der Erfindung weisen die Compounds röntgenamorphe Silikate mit Scherbenstruktur und zwingend Tenside, vorzugsweise anionische und nichtionische Tenside auf. Die Compounds können als weitere Inhaltsstoffe (Bi-)Carbonat, (Bi-)Sulfat, optische Aufheller, vorzugsweise wiederum maximal 5 Gew.-%, bezogen auf das Compound, sowie die obengenannten Cobuilder enthalten. Der Gehalt der Tenside-röntgenamorphe Silikat-Compounds in fertigen Wasch- oder Reinigungsmitteln ist wiederum derart, daß in Zeolith-haltigen Mitteln mit 10 bis 15 Gew.-% Zeolith auch 10 bis 15 Gew.-% Silikate enthalten sind. In Rezepturen mit weniger als 5 Gew.-% Zeolith sind die Tenside-röntgenamorphen Silikat-Compounds in den Mengen enthalten, daß die Mittel insgesamt 20 bis 30 Gew.-% Silikat aufweisen.

In einer weiteren bevorzugten Ausführungsform weisen die Compounds röntgenamorphe Silikate mit Scherbenstruktur und Peroxy-Bleichmittel auf. Als Bleichmittel kommen insbesondere Perborat oder gegebenenfalls stabilisiertes Percarbonat in Betracht. Weitere Inhaltsstoffe dieser Compounds können die bereits oben angegebenen Tenside, Cobuilder, sowie anorganische Salze sein. Der Gehalt der fertigen Wasch- oder Reinigungsmittel an den Bleichmittel-röntgenamorphen Silikat-Compounds ist vorzugsweise derart, daß die Mittel insgesamt 15 bis 30 Gew.-% Silikat und 15 bis 25 Gew.-% Peroxy-Bleichmittel aufweisen.

In einer weiteren Ausführungsform weisen die Compounds röntgenamorphe Silikate mit Scherbenstruktur sowie Schauminhibitoren, vorzugsweise Paraffine, Silikone oder Mischungen aus diesen auf. Der Gehalt der Schauminhibitoren in diesen Compounds kann bis zu 10 Gew.-%, vorzugsweise bis zu 5 Gew.-% ausmachen. Die Schauminhibitor-röntgenamorphen Silikat-Compounds können als weitere Inhaltsstoffe die obengenannten Cobuilder, Tenside, anorganischen Salze und/oder optische Aufheller enthalten.

Alle genannten Compounds weisen wie die reinen Silikate eine Aufnahmekapazität für fließfähige Hilfs- und Wertstoffe auf und können mit diesen imprägniert sein.

Für die Herstellung dieser erfindungsgemäßen Compounds gibt es mehrere Möglichkeiten. Eine Variante sieht dabei vor, daß bei der Auftrocknung einer wäßrigen Natriumsilikatzubereitung unter Mitverwendung einer Heißgasphase als Trocknungsmedium und/oder bei dem Tempern eines sprühgetrockneten Natriumsilikats mit Wassergehalten von wenigstens 15 Gew.-% nicht allein die Silikate, sondern Mischungen aus den Silikaten mit den anderen Inhaltsstoffen der Compounds wie beschrieben behandelt werden, wobei jedoch nur derartige Mischungen verarbeitet werden können, die noch die Ausbildung der Scherbenstruktur sicherstellen. Eine weitere Möglichkeit der Herstellung von Compounds mit röntgenamorphen Silikaten mit Scherbenstruktur besteht darin, daß zunächst die erfindungsgemäßen röntgenamorphen Silikate mit Scherbenstruktur wie beschrieben hergestellt und anschließend mit den anderen Inhaltsstoffen der Compounds in dem Fachmann bekannter Weise compoundiert werden. Als Möglichkeiten wären hier die Granulierung, die Extrusion oder auch die Walzenkompaktierung zu nennen. In einem weiteren Aufbereitungsschritt können diese Compounds dann mit flüssigen, aber auch mit festen Komponenten nachträglich behandelt und anschließend als Mehrstoffkomponente mit anderen Wasch- oder Reinigungsmittelbestandteilen zum fertigen Mittel gemischt, granuliert oder extrudiert werden.

Das Schüttgewicht der bevorzugten granularen Wasch- oder Reinigungsmittel, welche die erfindungsgemäßen Silikate bzw. Silikat-Compounds enthalten, beträgt im allgemeinen 300 bis 1200 g/l, vorzugsweise jedoch 500 bis 1100 g/l. Ganz besonders bevorzugt sind dabei Wasch- oder Reinigungsmittel mit Schüttgewichten von wenigstens 700 g/l. Ihre Herstellung kann nach jedem der bekannten Verfahren wie Mischen, Sprühtrocknung, Granulieren und Extrudieren erfolgen, wobei die erfindungsgemäßen röntgenamorphen und übertrockneten Silikate und vorzugsweise die mit fließfähigen Wertstoffen aus dem Gebiet der Wasch- oder Reinigungsmittel, insbesondere mit Niotensiden, beladenen Silikate vorteilhafterweise zu den übrigen Komponenten des Mittels hinzugemischt werden. Geeignet sind insbesondere solche Verfahren, in denen mehrere Teilkomponenten, beispielsweise sprühgetrocknete Komponenten und granulierte und/ oder extrudierte Komponenten miteinander vermischt werden. Insbesondere in Granululations- und Extrusionsverfahren ist es bevorzugt, die gegebenenfalls vorhandenen Aniontenside in Form eines sprühgetrockneten, granulierten oder extrudierten Compounds entweder als Zumischkomponente in den genannten Verfahren oder als Additiv nachträglich zu anderen Granulaten einzusetzen. Ebenso ist es möglich und kann in Abhängigkeit von der Rezeptur von Vorteil sein, wenn weitere einzelne Bestandteile des Mittels, beispielsweise Carbonate, Citrat bzw. Citronensäure oder andere Polycarboxylate bzw. Polycarbonsäuren, polymere Polycarboxylate, Zeolith und/oder Schichtsilikate, beispielsweise schichtförmige kristalline Disilikate, nachträglich zu sprühgetrockneten, granulierten und/oder extrudierten Komponenten hinzugemischt werden.

### Beispiele

### Beispiel 1: Herstellung von röntgenamorphen übertrockneten Silikaten

In einem Turbotrockner/Granulator der Firma Vomm (Italien) wurde eine 55 Gew.-%ige wäßrige Wasserglaslösung (Na₂O:SiO₂ 1:2,0) bei einer Temperatur des eingesetzten Heizgases (Luft) von 250 °C und bei einer Verweilzeit von 60 Sekunden auf ein röntgenamorphes Silikat mit Scherbenstruktur und einem Wassergehalt von 7,6 Gew.-% getrocknet. Ein analoges Ergebnis wurde erhalten, wenn die Wasserglaslösung in einem ersten Trocknungsschritt nur 20 Sekunden im Turbotrockner/Granulator verweilte und das angetrocknete Gut zwei weiteren Trocknungsschritten von je 20 Sekunden in dem Turbotrockner/Granulator ausgesetzt wurde.

Die Bestimmung des Calciumbindevermögens dieses röntgenamorphen und übertrockneten Silikats erfolgte potentiometrisch mit einer Calcium-sensitiven Elektrode der Firma Orion. Hierzu wurden zunächst in einem auf 25 °C thermostatisierten Glasgefäß 1 l Wasser von 30 °d (entsprechend 30 mg CaO/l) vorgelegt, diese Lösung mit Natronlauge auf pH 11,5 und mit Kaliumchlorid zur Simulierung eines für ein Waschmittel üblichen Elektrolytgehalts auf eine 0,08 molare Kaliumchlorid-Lösung eingestellt. Je 1 g der zu untersuchenden Substanz wurden in 5 ml Ethanol gelöst und unter Rühren zu der Kaliumchlorid-Lösung hinzugegeben. Die Abnahme der Calciumhärte wurde mittels eines Computers als Funktion der Zeit (Resthärte) bestimmt.

Das Calciumbindevermögen des röntgenamorphen übertrockneten Silikats wies nach 300 Sekunden eine Resthärte von 3 °d auf. Überraschenderweise stieg die Resthärte jedoch im weiteren Zeitverlauf wieder an und erreichte nach 1200 Sekunden den Wert 7,5 °d. Obwohl zur Zeit noch ungeklärt ist, wie es zu dem Phänomen des Wiederanstiegs der Resthärte kommt, ist doch ersichtlich, daß erfindungsgemäße röntgenamorphe übertrocknete Silikate sehr schnell den Härtebildner Calcium binden.

In einem Vergleichsbeispiel wurde das Calciumbindevermögen eines kristallinen schichtförmigen Disilikats (SKS 6^{(R)}, Handelsprodukt der Hoechst AG) gemessen. Hier wurde keine Anomalie eines Rückgangs der Restwasserhärte mit einem in dem beobachteten Zeitintervall anschließenden Wiederanstieg gefunden. Allerdings betrug die Restwasserhärte im Falle des SKS 6^{(R)} nach 300 Sekunden etwa 27 °d und nach 1200 Sekunden 24,4 °d.

Zusätzlich wurde in einem weiteren Test die Auflösegeschwindigkeit untersucht, wobei die Zeiten gemessen wurden, innerhalb der sich 80 Gew.-% bzw. 95 Gew.-% von 5 g des Silikats in 500 g demineralisiertem Wasser in einem Rührgefäß bei 40 °C (Konzentrationsmessung über die Leitfähigkeit) gelöst hatten. Dabei wurden Lösezeiten von 16 Sekunden (80%) und 25 Sekunden (95%) ermittelt. Zum Vergleich wurde der Versuch mit SKS 6^{(R)} wiederholt. Hier wurden Lösezeiten von 52 Sekunden (80%) und 80 Sekunden (95%) gefunden.

Zusätzlich wurde in einem weiteren Test die spezifische Oberfläche des röntgenamorphen Silikats nach BET (DIN 66131; Probenvorbereitung: 200 °C und 10⁻⁶ Torr) bestimmt. Es wurde ein Wert für die spezifische Oberfläche von 13,4 m²/g ermittelt.

### Beispiel 2: Inkrustationsinhibierung

Es wurden granulare Waschmittel nachstehender Zusammensetzung (erfindungsgemäßes Mittel M1 sowie Vergleichsbeispiel V1) in herkömmlicher Weise zusammengemischt und getestet. Dabei enthielt das erfindungsgemäße Mittel M1 als silikatischen Builder ein röntgenamorphes übertrocknetes Silikat gemäß Beispiel 1 und das Vergleichsbeispiel SKS 6^{(R)}.

| Zusammensetzung | (in Gew.-%) |
|---|---|
| Talgfettalkoholsulfat | 8,5 |
| C₁₂-C₁₈-Fettalkohol mit 5 EO | 16,5 |
| Talgfettalkohol mit 5 EO | 1,8 |
| C₁₂-C₁₈-Fettsäureseife-Natriumsalz | 0,8 |
| silikatischer Builder | 34,0 |
| Perboratmonohydrat | 16,0 |
| TAED | 6,0 |
| Polyethylenglykol (relative Molekülmasse 400) | 2,0 |
| Protease | 1,24 |
| Entschäumergranulat auf Silikonölbasis | 0,6 |
| Natriumsulfat und Wasser | Rest |

Die Prüfung erfolgte unter praxisnahen Bedingungen in Haushaltswaschmaschinen. Hierzu wurden die Maschinen mit 3,0 kg sauberer Füllwäsche und 0,5 kg Testgewebe beschickt, wobei das Testgewebe zum Teil mit üblichen Testanschmutzungen zur Prüfung des Primärwaschvermögens imprägniert war und zum Teil zur Prüfung des Sekundärwaschvermögens aus weißem Gewebe bestand. Als Testgewebe wurden Streifen aus standardisiertem Baumwollgewebe (Wäschereiforschungsanstalt Krefeld, WFK), Wirkware (Baumwolltrikot, B), Nessel (BN) und Frottiergewebe (FT) verwendet.
- Waschbedingungen:: Leitungswasser von 23 °d (äquivalent zu 230 mg CaO/l), eingesetzte Waschmittelmenge pro Mittel und Maschine 80 g,
90 °C Waschprogramm (inklusive Aufheizphase), Flottenverhältnis (kg Wäsche : Liter Waschlauge im Hauptwaschgang) 1:5,7,
4maliges Nachspülen mit Leitungswasser, Abschleudern, Trocknen.

Die Primärwaschleistungen der Mittel M1 und V1 waren vergleichbar.

Nach 25 Waschzyklen wurde der Aschegehalt der Textilproben quantitativ bestimmt. Das erfindungsgemäße Mittel M1 zeigte sowohl an den Einzelgeweben mit Ausnahme von Wirkware (B) als auch im Durchschnitt über alle Gewebe bessere Aschegehalte als das Vergleichsbeispiel V1.

**Tabelle 1:**

| | Gew.-% Asche | | | | |
|---|---|---|---|---|---|
| | FT | BN | B | WFK | Ø |
| Anfangswert | 0,55 | 0,12 | 0,72 | 0,28 | 0,42 |
| M1 | 1,92 | 1,95 | 1,81 | 4,48 | 2,54 |
| V1 | 2,18 | 2,75 | 1,38 | 4,58 | 2,72 |

### Beispiel 3: Beladung von röntgenamorphen übertrockneten Silikaten

Es wurde 1 kg des röntgenamorphen übertrockneten Silikats gemäß Beispiel 1 in einem handelsüblichen Mischer mit C₁₂-C₁₈-Fettalkohol mit 5 EO und C₁₂-C₁₄-Fettalkohol mit 3 EO im Gewichtsverhältnis 80:20 innerhalb von 2 Minuten beaufschlagt. Zum Vergleich wurde dieses Beispiel mit Zeolithpulver und SKS 6^{(R)} wiederholt. Die Tabelle 2 gibt an, welche Mengen an Niotensid von dem jeweiligen Träger aufgenommen werden konnten, ohne daß die Rieselfähigkeit der imprägnierten Produkte verlorenging.

**Tabelle 2:**

| Beladung verschiedener Trägermaterialien mit Niotensid | |
|---|---|
| Träger (1 kg) | Menge Niotensid (in kg) |
| Silikat gemäß Beispiel 1 | 2,4 |
| | |
| Zeolithpulver | 0,22 |
| | |
| SKS 6^{(R)} | 0,68 |

## Patentansprüche

1. Natriumsilikate des Modulbereichs (Molverhältnis SiO₂/Na₂O) von 1,3 bis 4 in der Form eines feinteiligen Feststoffes in Scherbenstruktur mit der Befähigung zur Minderung der Inkrustationsbildung beim Einsatz als Builderkomponente in Wasch- oder Reinigungsmitteln, dadurch gekennzeichnet, daß sie als röntgenamorphes übertrocknetes Gut (primäres Trocknungsgut) mit Wassergehalten im Bereich unterhalb 15 Gew.-% und Schüttgewichten des unverdichteten Feststoffgutes gleich oder kleiner 500 g/l vorliegen, das durch Auftrocknung einer wäßrigen Natriumsilikatzubereitung unter Mitverwendung einer Heißgasphase als Trocknungsmedium und/oder durch Tempern eines sprühgetrockneten Natriumsilikats mit Wassergehalten von wenigstens 15 Gew.-% bei Temperaturen von 120 bis 450°C, erforderlichenfalls bei gleichzeitiger oder nachfolgender Krafteinwirkung zur Ausbildung der Scherbenstruktur, hergestellt worden ist.

2. Natriumsilikate nach Anspruch 1, dadurch gekennzeichnet, daß sie als primäres Trocknungsgut Schüttgewichte von höchstens 400 g/l und insbesondere im Bereich von etwa 100 bis 350 g/l aufweisen.

3. Natriumsilikate nach Anspruch 1 oder 2, dadurch gekennzeichnet, daß sie als primäres Trocknungsgut mit einer spezifischen BET-Oberfläche von mindestens 5 m²/g - bevorzugt mindestens 7,5 m²/g und insbesondere mindestens 10 bis 20 m²/g - und vorzugsweise einem kumulativen Volumen von wenigstens 100 mm³/g - insbesondere von wenigstens 150 mm³/g - ausgebildet sind.

4. Natriumsilikate nach einem der Ansprüche 1 bis 3, dadurch gekennzeichnet, daß sie Teilchengrößen von 10 bis 200 µm, vorzugsweise von 20 bis 120 µm und insbesondere von 50 bis 100 µm bei Wandstärken von 1 bis 5 µm aufweisen.

5. Natriumsilikate nach einem der Ansprüche 1 bis 4, dadurch gekennzeichnet, daß sie als primäres Trocknungsgut mikrokristalline Feststoffanteile - bestimmt durch Elektronenbeugung - aufweisen.

6. Natriumsilikate nach einem der Ansprüche 1 bis 5, dadurch gekennzeichnet, daß sie in ihren Modulwerten zu wenigstens 5 Gew.-%, vorzugsweise zu wenigstens 10 bis 20 Gew.-% vom Modul 2 abweichen.

7. Natriumsilikate nach einem der Ansprüche 1 bis 6, dadurch gekennzeichnet, daß sie zur Aufnahme von wenigstens mengengleichen Gewichtsanteilen eines fließfähigen Gutes ohne Verlust ihrer rieselfähigen Beschaffenheit befähigt sind, wobei solche Natriumsilikate der angegebenen Art bevorzugt sein können, die wenigstens das Doppelte ihres Eigengewichts an fließfähiger Phase aufnehmen können ohne zu verklumpen.

8. Natriumsilikate nach einem der Ansprüche 1 bis 7, dadurch gekennzeichnet, daß sie als primäres Trocknungsgut Restwassergehalte oberhalb 6 Gew.-%, insbesondere 6 bis 13 Gew.-%, aufweisen.

9. Natriumsilikate nach einem der Ansprüche 1 bis 8, dadurch gekennzeichnet, daß die übertrockneten Natriumsilikate eine Lösegeschwindigkeit in Wasser (Standardbedingungen 95 Gew.-%/40°C) von maximal 1 Minute aufweisen.

10. Verfahren zur Herstellung von Natriumsilikaten nach einem der Ansprüche 1 bis 9, dadurch gekennzeichnet, daß das übertrocknete Gut durch Auftrocknen fließfähiger wäßriger Lösungen der Natriumsilikate mittels Heißgasen im Rahmen einer Sprühtrocknung mit nachfolgendem Tempern bis etwa 500 °C zur Übertrocknung und Zerstörung der Hohlkugelstruktur oder
in einer Vorrichtung hergestellt wird, die den zusätzlichen Eintrag von mechanischer Energie in das zu trocknende Flüssig- und/oder Festgut ermöglicht.

11. Verfahren nach Anspruch 10, dadurch gekennzeichnet, daß die Natriumsilikate unter Einsatz von Turbotrocknern als röntgenamorphes übertrocknetes Gut mit Schüttgewichten bevorzugt unter 400 g/l gewonnen werden.

12. Compound, enthaltend Natriumsilikate gemäß einem der Ansprüche 1 bis 9.

13. Compound nach Anspruch 12, dadurch gekennzeichnet, daß es Zeolith enthält, wobei Gewichtsverhältnisse röntgenamorphe Silikate mit Scherbenstruktur zu Zeolith von 3 : 1 bis 1 : 3 bevorzugt sind.

14. Compound nach Anspruch 12, dadurch gekennzeichnet, daß es Cobuilder enthält, wobei das Gewichtsverhältnis röntgenamorphe Silikate mit Scherbenstruktur zu Cobuilder größer als 1 ist.

15. Compound nach Anspruch 12, dadurch gekennzeichnet, daß es anionische und/oder nichtionische Tenside enthält.

16. Compound nach Anspruch 12, dadurch gekennzeichnet, daß es Peroxy-Bleichmittel, vorzugsweise Perborat oder gegebenenfalls stabilisiertes Percarbonat enthält.

17. Compound nach Anspruch 12, dadurch gekennzeichnet, daß es Schauminhibitoren wie Paraffine, Silikone oder Mischungen aus diesen enthält.

18. Feste Wasch- oder Reinigungsmittel mit Schüttgewichten von wenigstens 700 g/l, enthaltend Tenside in Abmischung mit die Wasch- oder Reinigungskraft verstärkenden Builderkomponenten, zusammen mit weiteren Hilfs- und/oder Wertstoffen, sowie schütt- und rieselfähige Wertstoffgemische zur Verwendung im genannten Gebiet, enthaltend eine oder mehrere Builderkomponente(n), wenigstens anteilig auf Basis von wasserlöslichen Natriumsilikaten mit einem Modul von 1,3 bis 4, in Abmischung mit weiteren Wert- und/oder Hilfsstoffen des genannten Einsatzgebietes, dadurch gekennzeichnet, daß sie - insbesondere zur Ausbildung und/oder Verstärkung der Inkrustationsminderung - wasserlösliche röntgenamorphe Natriumsilikate, die durch Auftrocknung wäßriger Natriumsilikatzubereitungen zu einem übertrockneten rieselfähigen Feststoffgut mit Restwassergehalten unterhalb 15 Gew.-% und Schüttgewichten von höchstens 500 g/l hergestellt worden sind und Scherbenstruktur sowie mikrokristalline Feststoffbereiche aufweisen, gemäß einem der Ansprüche 1 bis 9 oder daraus hergestellte Compounds gemäß einem der Ansprüche 12 bis 17 als Mischungskomponente enthalten.

19. Wasch- oder Reinigungsmittel nach Anspruch 18, dadurch gekennzeichnet, daß sie das röntgenamorphe Natriumsilikat oder das Compound in Abmischung mit fließfähigen Wertstoffen aus dem Gebiet der Wasch- oder Reinigungsmittel enthalten, wobei als fließfähige Komponenten insbesondere Niotenside, flüssige Zubereitungen von Aniontensiden, plastifizierte hochkonzentrierte Aniontenside, fließfähige Textilweichmacherformulierungen und/oder Schauminhibitoren, insbesondere aus der Klasse der Silikone und/oder Paraffine, vorliegen.

20. Wasch- oder Reinigungsmittel nach Anspruch 18 oder 19, dadurch gekennzeichnet, daß sie als partikuläre Wertstoffkonzentrate ausgebildet sind, in denen die Beladung der Natriumsilikate wenigstens 50 Gew.-%, vorzugsweise wenigstens 100 Gew.-% und insbesondere wenigstens 200 Gew.-% - Gew.-% bezogen auf das Gewicht des scherbenförmigen Trägers - ausmacht.

21. Verwendung von röntgenamorphen übertrockneten Natriumsilikaten gemäß einem der Ansprüche 1 bis g oder 12 bis 17, dadurch gekennzeichnet, daß Natriumsilikate des Modulbereichs (Molverhältnis SiO₂/Na₂O) von 1,3 bis 3,7 mit Restwassergehalten unterhalb 15 Gew.-% bei unteren Grenzwerten des Restwassers von wenigstens etwa 1 Gew.-% und vorzugsweise von wenigstens etwa 6 Gew.-% und den nachfolgenden Stoffeigenschaften des primären Trocknungsgutes verwendet werden: Schüttgewichte gleich oder kleiner 500 g/l, spezifische BET-Oberfläche von mindestens 5 m²/g sowie kumulatives Volumen von wenigstens 100 mm³/g, als multifunktionelle Mischungskomponente mit Builderwirkung und hoher Aufnahmekapazität für fließfähige Hilfs- und Wertstoffe in Abmischungen des Bereiches fester Wasch- oder Reinigungsmittel oder hierfür geeigneter Vorgemische zur Ausbildung und Verstärkung der primären und zugleich der sekundären Wasch- oder Reinigungskraft (Inkrustationsminderung).

22. Verwendung nach Anspruch 21, dadurch gekennzeichnet, daß die übertrockneten Natriumsilikate Restwassergehalte des Bereichs von etwa 6 bis 13 Gew.-% aufweisen, wobei bevorzugte Modulwerte im Bereich von wenigstens 1,5, insbesondere wenigstens 1,9 bis 3,3 und vorzugsweise bis 3,0 liegen.

## Claims

1. Sodium silicates with a modulus (molar ratio of SiO₂ to Na₂O) of 1.3 to 4 in the form of an absorbent, fineparticle solid in shard form with the ability to reduce incrustation when used as a builder component in detergents, characterized in that they are in the form of an X-ray amorphous overdried material (primary drying product) with water contents below 15% by weight and apparent densities of the non-compacted solid granules of 500 g/l or lower which has been produced by drying of a water-containing sodium silicate preparation using a hot gas phase as the drying medium and/or by heating of a spray-dried sodium silicate with water contents of at least 15% by weight at temperatures of 120 to 450°C, if necessary accompanied or followed by the application of forces to produce the shard structure.

2. Sodium silicates as claimed in claim 1, characterized in that they have apparent densities as a primary drying product of at most 400 g/l and more particularly in the range from about 100 to 350 g/l.

3. Sodium silicates as claimed in claim 1 or 2, characterized in that they are in the form of a primary drying product with a specific BET surface of at least 5 m²/g, preferably at least 7.5 m² /g and more preferably at least 10 to 20 m² /g and a cumulative volume of preferably at least 100 mm³/g and more preferably of at least 150 mm³/g.

4. Sodium silicates as claimed in any of claims 1 to 3, characterized in that they have particle sizes of 10 to 200 µm, preferably 20 to 120 µm and more preferably 50 to 100 µm for wall thicknesses of 1 to 5 µm.

5. Sodium silicates as claimed in any of claims 1 to 4, characterized in that, as a primary drying product, they contain microcrystalline solids as determined by electron diffraction.

6. Sodium silicates as claimed in any of claims 1 to 5, characterized in that they differ in their modulus values by at least 5% by weight and preferably by at least 10 to 20% by weight from the modulus 2.

7. Sodium silicates as claimed in any of claims 1 to 6, characterized in that they are capable of absorbing at least equal quantities by weight of a liquid without losing their free-flow property, sodium silicates of the type mentioned which are capable of absorbing at least twice their weight of liquid phase without forming lumps being preferred.

8. Sodium silicates as claimed in any of claims 1 to 7, characterized in that they have residual water contents as a primary drying product of more than 6% by weight and more particularly from 6 to 13% by weight.

9. Sodium silicate as claimed in any of claims 1 to 8, characterized in that the overdried sodium silicates have a dissolving rate in water (standard conditions 95% by weight/40°C) of at most 1 minute.

10. A process for the production of the sodium silicates claimed in any of claims 1 to 9, characterized in that the overdried sodium silicate is produced by drying liquid aqueous solutions of the sodium silicates with hot gases in a spray-drying process with subsequent heating to around 500°C to overdry and destroy the hollow bead structure or in an apparatus which enables mechanical energy to be additionally introduced into the liquid and/or solid to be dried.

11. A process as claimed in claim 10, characterized in that the sodium silicates are obtained as an X-ray amorphous overdried material with apparent densities below 400 g/l by using turbodryers.

12. A compound containing the sodium silicates claimed in any of claims 1 to 9.

13. A compound as claimed in claim 12, characterized in that it contains zeolite, ratios by weight of X-ray amorphous shard silicates to zeolite of 3:1 to 1:3 being preferred.

14. A compound as claimed in claim 12, characterized in that it contains co-builders, the ratio by weight of X-ray amorphous shard silicates to co-builder being greater than 1.

15. A compound as claimed in claim 12, characterized in that it contains anionic and/or nonionic surfactants.

16. A compound as claimed in claim 12, characterized in that it contains peroxy bleaching agents, preferably perborate or optionally stabilized percarbonate.

17. A compound as claimed in claim 12, characterized in that it contains foam inhibitors, such as paraffins, silicones or mixtures thereof.

18. Solid detergents with apparent densities of at least about 700 g/l which contain surfactants in admixture with detergency-boosting builder components together with other auxiliaries and/or useful materials and free-flowing, pourable mixtures of useful materials for use in the field mentioned above, containing one or more builder component(s) which are at least partly based on water-soluble sodium silicates with a modulus of 1.3 to 4 in admixture with other useful materials and/or auxiliaries from the field in question, characterized in that - in order in particular to promote or enhance the reduction of incrustation - they contain water-soluble X-ray amorphous sodium silicates, which have been produced by drying of water-containing sodium silicate preparations to form an overdried free-flowing solid with residual water contents below 15% by weight and apparent densities of at most 500 g/l and which have a shard-like structure and comprise microcrystalline solid zones, as claimed in any of claims 1 to 9 or compounds produced therefrom as claimed in any of claims 12 to 17 as a mixture component.

19. Detergents as claimed in claim 18, characterized in that they contain the X-ray amorphous sodium silicate or the compound in admixture with flowable useful materials from the field of detergents, the flowable components present being in particular nonionic surfactants, liquid preparations of anionic surfactants, plasticized highly concentrated anionic surfactants, flowable fabric softener formulations and/or foam inhibitors, more particularly from the class of silicones and/or paraffins.

20. Detergents as claimed in claim 18 or 19, characterized in that they are in the form of particulate useful-material concentrates in which the charge of the sodium silicates makes up at least 50% by weight, preferably at least 100% by weight and more preferably at least 200% by weight, based on the weight of the shard-like support.

21. The use of the X-ray amorphous overdried sodium silicates claimed in any of claims 1 to 9 or 12 to 17, characterized in that sodium silicates with a modulus (molar ratio of SiO₂ to Na₂O) of 1.3 to 3.7 and residual water contents of less than 15% by weight - for lower limits to the residual water content of at least about 1% by weight and preferably at least about 6% by weight - and the following properties of the primary dried product: apparent densities 500 g/l or lower, specific BET surface at least 5 m² /g and cumulative volume at least 100 mm³/g, are used as a multifunctional mixture component with a builder effect and a high absorption capacity for flowable auxiliaries and useful materials in mixtures of solid detergents or suitable detergent compounds for forming and enhancing primary and secondary washing power (reduction of incrustation).

22. The use claimed in claim 21, characterized in that the overdried sodium silicates have residual water contents of around 6 to 13% by weight, preferred modulus values being at least 1.5, more particularly at least 1.9 to 3.3 and preferably up to 3.0.

## Revendications

1. Silicates de sodium de la zone modulaire (rapport molaire SiO₂/Na₂O) de 1,3 à 4 sous la forme d'une matière solide finement divisée en structure en tets ayant l'aptitude à réduire la formation d'incrustation lors de l'utilisation comme composant d'adjuvant dans des produits de lavage ou de nettoyage,
caractérisés en ce qu'
ils sont fabriqués comme matériau surséché amorphe aux rayons X (matériau de séchage primaire) avec des teneurs en eau dans la zone en dessous de 15 % en poids et des poids de matière en vrac du matériau solide non compacté égaux ou inférieurs à 500 g/ℓ, matériau qui a été fabriqué pour séchage d'une préparation aqueuse de silicate de sodium, avec co-utilisation d'une phase de gaz chaud comme milieu de séchage et/ou par recuit d'un silicate de sodium séché par pulvérisation avec des teneurs en eau d'au moins 15 % en poids à des températures de 120 à 450°C, si nécessaire avec action de la force simultanée ou successive pour réaliser la structure en tets.

2. Silicates de sodium selon la revendication 1,
caractérisés en ce qu'
ils comportent comme matériau de séchage primaire des poids de matière en vrac d'au maximum 400 g/ℓ et en particulier dans la zone d'environ 100 à 350 g/ℓ.

3. Silicates de sodium selon les revendications 1 ou 2,
caractérisés en ce qu'
ils sont réalisés comme matériau de séchage primaire avec une surface BET spécifique d'au moins 5 m²/g - de préférence d'au moins 7,5 m²/g et en particulier d'au moins 10 à 20 m^{2/}g - et de préférence avec un volume cumulatif d'au moins 100 mm³/g - en particulier d'au moins 150 mm³/g.

4. Silicates de sodium selon une des revendications 1 à 3,
caractérisés en ce qu'
ils ont des grandeurs de particules de 10 à 200 µm, de préférence de 20 à 120 µm et en particulier 50 à 100 µm pour des épaisseurs de parois de 1 à 5 µm.

5. Silicates de sodium selon une des revendications 1 à 4,
caractérisés en ce qu'
ils comportent comme matériau de séchage primaire des parties solides microcristallines (déterminées par diffraction d'électrons).

6. Silicates de sodium selon une des revendication 1 à 5,
caractérisés en ce qu'
ils dérivent dans leurs valeurs modulaires du module 2 pour au moins 5 % en poids, de préférence pour au moins 10 à 20 % en poids.

7. Silicates de sodium selon une des revendications 1 à 6,
caractérisés en ce qu'
ils sont aptes à recevoir au moins des parties en poids égales en quantités d'un matériau apte à l'écoulement sans perte de leur propriété d'écoulement, de tels silicates de sodium du type indiqué pouvant être préférés, qui peuvent recevoir au moins le double de leur poids propre de la phase apte à l'écoulement sans prise en masse.

8. Silicates de sodium selon une des revendications 1 à 7,
caractérisés en ce qu'
ils comportent comme matériau de séchage primaire des teneurs d'eau résiduelle supérieures à 6 % en poids, en particulier de 6 à 13 % en poids.

9. Silicates de sodium selon une des revendications 1 à 8,
caractérisés en ce que
les silicates de sodium surséchés ont une vitesse de dissolution dans l'eau (conditions standard 95 % en poids/40°C) d'au maximum 1 minute.

10. Procédé de fabrication de silicates de sodium selon une des revendications 1 à 9,
caractérisé en ce que
le matériau surséché est fabriqué par séchage de solutions aqueuses aptes à l'écoulement des silicates de sodium au moyen des gaz chauds dans le cadre d'un séchage par pulvérisation avec recuit consécutif jusqu'à environ 500°C pour le surséchage et la destruction de la structure de billes creuses ou est fabriqué dans un dispositif, qui rend possible l'insertion supplémentaire d'énergie mécanique dans le matériau liquide et/ou solide à sécher.

11. Procédé selon la revendication 10,
caractérisé en ce que
les silicates de sodium sont obtenus en utilisant des turbosécheurs en tant que matériau surséché amorphe aux rayons X ayant des poids en vrac de préférence inférieurs à 400 g/ℓ.

12. Composé contenant des silicates de sodium selon une des revendications 1 à 9.

13. Composé selon la revendication 12,
caractérisé en ce qu'
il contient de la zéolite, les rapports de poids des silicates amorphes aux rayons X avec une structure en tets à la zéolite étant préférés de 3:1 à 1:3.

14. Composé selon la revendication 12,
caractérisé en ce qu'
il contient des co-adjuvants, le rapport de poids des silicates amorphes aux rayons X avec une structure en tets aux co-adjuvants est supérieur à 1.

15. Composé selon la revendication 12,
caractérisé en ce qu'
il contient des tensioactifs anioniques et/ou non ioniques.

16. Composé selon la revendication 12,
caractérisé en ce qu'
il contient des agents de blanchiment peroxy, de préférence du perborate ou éventuellement du percarbonate stabilisé.

17. composé selon la revendication 12,
caractérisé en ce qu'
il contient des inhibiteurs de mousse comme des paraffines, des silicones ou des mélanges de ceux-ci.

18. Agents de lavage ou de nettoyage solides avec des poids en vrac d'au moins 700 g/ℓ, contenant des tensioactifs en mélange avec des composants d'adjuvants renforçant l'énergie de lavage ou de nettoyage, ensemble avec d'autres matières de valeur et/ou auxiliaires, ainsi que des mélanges de matières de valeur aptes au durcissement et aptes à l'écoulement pour l'utilisation dans le domaine cité, contenant un ou plusieurs composant(s) d'adjuvants, au moins partiellement à base de silicates de sodium solubles dans l'eau avec un module de 1,3 à 4, en mélange avec d'autres matières de valeur et/ou auxiliaires du domaine d'utilisation cité,
caractérisé en ce qu'
ils contiennent - particulièrement pour la réalisation et/ou le renforcement de la réduction d'incrustation - des silicates de sodium solubles dans l'eau amorphes aux rayons X - qui ont été produits par séchage de préparation de silicate de sodium en un matériau solide surséché apte à l'écoulement ayant des teneurs résiduelles en eau en dessous de 15 % en poids et des poids en vrac d'au maximum 500 g/ℓ et comportent une structure en tets ainsi que des zones solides microcristallines, selon une des revendications 1 à 9 ou des composés fabriqués à partir de cela selon une des revendications 12 à 17 en tant que composant de mélange.

19. Agents de lavage ou de nettoyage selon la revendication 18,
caractérisé en ce qu'
ils contiennent le silicate de sodium amorphe aux rayons X ou le composé en mélange avec des matières de valeur aptes à l'écoulement du domaine des agents de lavage ou de nettoyage, dans lesquels comme composants aptes à l'écoulement sont présents en particulier des tensioactifs non ioniques, des préparations liquides de tensioactifs anioniques, des tensioactifs anioniques plastifiés hautement concentrés, des formulations d'assouplissants du textile et/ou des inhibiteurs de mousse, en particulier de la classe des silicones et/ou des paraffines.

20. Agents de lavage ou de nettoyage selon les revendications 18 ou 19,
caractérisés en ce qu'
ils sont réalises comme des concentrés particuliers de matière valable, dans lesquels la charge des silicates de sodium concerne au moins 50 % en poids, de préférence au moins 100 % en poids et en particulier au moins 200 % en poids - % en poids rapporté au poids du support sous forme de tets.

21. Utilisation de silicates de sodium surséchés amorphes aux rayons X selon une des revendications 1 à 9 ou 12 à 17,
caractérisé en ce que
sont utilisés des silicates de sodium de la zone modulaire (rapport molaire SiO₂/Na₂O) de 1,3 à 3,7 ayant des teneurs d'eau résiduelle en dessous de 15 % en poids avec des valeurs limites inférieures de l'eau résiduelle au moins d'environ 1 % en poids et de préférence au moins d'environ 6 % en poids et les propriétés de matière suivantes : poids en vrac égal ou inférieur à 500 g/ℓ, surface spécifique BET d'au moins 5 m²/g ainsi que volume cumulatif d'au moins 100 mm³/g, comme composant de mélange multifonctionnel avec action d'adjuvant et capacité de réception élevée pour des matières auxiliairement de valeur dans des mélanges du domaine des agents de lavage ou de nettoyage ou des prémélanges appropriés pour ceux-ci pour la réalisation et le renforcement de la force de lavage ou de nettoyage primaire et en même temps de celle secondaire (réduction de l'incrustation).

22. Utilisation selon la revendication 21,
caractérisée en ce que
les silicates de sodium ont des teneurs d'eau résiduelle du domaine d'environ 6 à 13 % en poids, les valeurs modulaires préférées se situant dans la zone d'au moins 1,5, en particulier d'au moins 1,9 à 3,3 et de préférence jusqu'à 3,0.
